(19) Europäisches Patentamt
European Patent Office
Office européen des brevets

(11) **EP 4 054 910 B1**

(12) **FASCICULE DE BREVET EUROPEEN**

(45) Date de publication et mention de la délivrance du brevet:
**27.03.2024  Bulletin 2024/13**

(21) Numéro de dépôt: **20792449.9**

(22) Date de dépôt: **22.10.2020**

(51) Classification Internationale des Brevets (IPC):
**B60W 10/06** (2006.01)   **B60W 10/08** (2006.01)
**B60W 20/10** (2016.01)   **B60W 50/02** (2012.01)
**B60W 50/038** (2012.01)   **B60W 30/14** (2006.01)

(52) Classification Coopérative des Brevets (CPC):
**B60W 10/06; B60W 10/08; B60W 20/10;**
**B60W 50/0205; B60W 50/038;** B60W 30/143;
B60W 2050/021; B60W 2510/0657;
B60W 2510/083; B60W 2520/30; B60W 2540/10;
B60W 2710/0666; B60W 2710/083; B60W 2720/30

(86) Numéro de dépôt international:
**PCT/EP2020/079707**

(87) Numéro de publication internationale:
**WO 2021/089333 (14.05.2021 Gazette 2021/19)**

(54) **PROCÉDÉ DE COMMANDE D'UN GROUPE MOTOPROPULSEUR POUR VÉHICULE AUTOMOBILE COMPRENANT AU MOINS DEUX SOURCES DE PUISSANCE MOTRICE**

VERFAHREN ZUR STEUERUNG EINES ANTRIEBSSTRANGS EINES KRAFTFAHRZEUGS MIT MINDESTENS ZWEI ANTRIEBSENERGIEQUELLEN

METHOD FOR CONTROLLING A MOTOR VEHICLE POWERTRAIN COMPRISING AT LEAST TWO DRIVING POWER SOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **08.11.2019  FR 1912583**

(43) Date de publication de la demande:
**14.09.2022  Bulletin 2022/37**

(73) Titulaires:
- **Renault s.a.s**
  **92100 Boulogne Billancourt (FR)**
- **NISSAN MOTOR CO., LTD.**
  **Yokohama-shi, Kanagawa 221-0023 (JP)**

(72) Inventeurs:
- **DUVIVIER, Vincent**
  **91510 JANVILLE-SUR-JUINE (FR)**
- **SUBE-LEVRET, Mickael**
  **91300 MASSY (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**DE-A1-102005 040 786    DE-A1-102005 062 870**
**DE-A1-102010 047 016**

## Description

### *Domaine technique*

L'invention a pour domaine technique le contrôle des groupes motopropulseurs de véhicule automobile, et plus particulièrement le contrôle de tels groupes hybrides ou électriques.

### *Etat de la technique antérieure*

L'accélération attendue par le conducteur est l'accélération qui répond de manière univoque à un certain enfoncement de la pédale d'accélérateur, enfoncement issu de la volonté du conducteur.

Pour l'entraînement d'un véhicule à une accélération donnée $\gamma$, le groupe motopropulseur (« GMP ») du véhicule, qui est par exemple équipé d'un moteur à combustion interne, doit transmettre à au moins une roue motrice du véhicule un couple qui produit un effort d'entraînement ou effort moteur *F_mot,* tel que, selon le principe fondamental de la dynamique, on ait :

$$m\gamma = F\_mot - \sum F\_res$$

Avec :

m : la masse du véhicule et
$\Sigma F\_res$ : la somme des force résistives à l'avancement du véhicule.

La force motrice *F_mot* définie par :

$$C\_roue = F\_roue \times r$$

Avec

C_roue : le couple à la roue
r : le rayon de la roue.

Par ailleurs, dans le cas d'un couple provenant d'un moteur unique, par exemple d'un moteur à combustion interne, on peut écrire une équation de transfert des couples à partir de la conservation de la puissance entre la source motrice et la roue en prenant comme hypothèse un rendement unitaire de la chaîne de transmission entre la source motrice et la roue (ladite chaîne de transmission comprenant notamment une boîte de vitesses avec plusieurs rapports). On obtient alors l'équation suivante :

$$P\_mot = P\_roue$$

Qui peut être reformulée de la façon suivante

$$C\_mot \times \omega\_mot = C\_roue \times \omega\_roue$$

Soit :

$$C\_mot = C\_roue \times \left(\frac{\omega_{roue}}{\omega_{mot}}\right)$$

Avec :

*P_mot* : la puissance moteur,
*P_roue* : la puissance transmise à la roue,
*C_mot* : le couple moteur,
*C_roue* : le couple à la roue,
$\omega$_*roue* : la vitesse de rotation de la roue, et
$\omega$_mot : la vitesse de rotation du moteur.

On peut donc écrire :

$$F\_mot = C\_mot/r \ \ \omega\_mot/\omega\_roue$$

Où $\omega\_mot/\omega\_roue$ est l'inverse du rapport de démultiplication, ou rapport de réduction, entre le moteur et les roues. Ce rapport dépend notamment du rapport de boîte engagé.

Dans la décomposition des efforts résistants $\Sigma F\_res$, on peut trouver notamment

- les forces aérodynamiques

$$F\_a = 0.5 * \rho * S * C\_x * V^2$$

avec : $\rho$ : masse volumique de l'air,
S : surface frontale du véhicule,
C_x : coefficient de traînée, et
V : vitesse du véhicule

- une force de résistance au roulement

$$F_{ro} = m * g * C_{rr}$$

avec :

g=l'accélération de la pesanteur;
C_rr=le coefficient de résistance des pneus

- la composante horizontale de la pesanteur, en cas de pente montante :

$$F_p = m * g * \sin(\alpha);$$

avec a : la pente

Il s'ajoute à ces forces résistantes, des forces d'inertie liées à tout élément massique X de la chaîne de traction en rotation autour d'un axe, comportant de ce fait une inertie en rotation, tel que :

$$F_{inert.x} = \frac{C_{inert.x}}{r}$$

Le couple d'inerte $C_{inert.x}$ d'un élément massique X en accélération rotative dans la chaine de traction peut être exprimé en fonction de la dérivée de sa vitesse de rotation $\dot{\omega}_x$ et de son moment d'inertie $I_X$ :

$$C_{inert_{X/0}} = I_X * \dot{\omega}_X$$

On peut ensuite exprimer le couple $C_{inert_{X/0}}$ à la roue correspondant en accord avec l'équation de transfert de couple ci-dessus, $\omega_{roue}$ étant la vitesse de rotation roue.

$$C_{inert_{X/roue}} = C_{inert_{X/0}} \left( \frac{\omega_X}{\omega_{roue}} \right)$$

Soit

$$C_{inert_{X/roue}} = I_X * \dot{\omega}_{roue} \left( \frac{\omega_X}{\omega_{roue}} \right)^2$$

Or, l'accélération angulaire de la roue $\dot{\omega}_{roue}$ et l'accélération longitudinale $\gamma$ du véhicule sont reliées par la relation suivante :

$$\gamma = \dot{\omega}_{roue} * r$$

On peut donc écrire :

$$C_{inert_{X/roue}} = I_X * \frac{\gamma}{r} * \left( \frac{\omega_X}{\omega_{roue}} \right)^2$$

Avec :

$\dfrac{\omega_X}{\omega_{roue}}$ : l'inverse du rapport de démultiplication, ou rapport de réduction, entre l'élément massique en rotation X et la roue.

Le principe fondamental de la dynamique, tenant compte de ces forces d'inertie $F_{inert}$ des éléments massiques en rotation de la chaîne de traction, s'écrit comme suit :

$$m\gamma = \frac{C_{mot}}{r} \frac{\omega_{mot}}{\omega_{roue}} - F_a - F_{ro} - F_p - F_{inert}$$

On note que le terme $F_{inert}$ contient la somme des inerties de tous les éléments massiques en rotation, c'est-à-dire de toutes les pièces x1,x2, ... xi,...xn de la chaine de traction qui sont en rotation autour d'un axe, ramenées chacune à la roue.

On peut alors écrire l'équation suivante :

$$F_{inertie.roue} = \left\{ \sum_i \left[ \frac{I_{xi}}{r^2} \times \left( \frac{\omega_{xi}}{\omega_{roue}} \right)^2 \right] \right\}$$

Cette équation peut être reformulée de la façon suivante sous forme d'un couple.

$$C_{inertie.roue} = \left\{ \sum_i \left[ \frac{I_{xi}}{r} \times \left( \frac{\omega x_i}{\omega_{roue}} \right)^2 \right] \right\}$$

Avec :

$F_{inertie.roue}$ : la force à la roue des pièces en rotation,
$C_{inertire.roue}$ : le couple à la roue des pièces en rotation,
r : le rayon de la roue
$\omega_{xi}$ : la vitesse de rotation angulaire de la pièce xi de la chaîne de traction
$\omega_{roue}$ : la vitesse de rotation angulaire des roues
m : la masse du véhicule
$\gamma$ : l'accélération longitudinale du véhicule
$I_{xi}$ : l'inertie en rotation de la pièce xi de la chaîne de traction que l'on mesure lors de sa conception mécanique

Il résulte de l'équation du principe fondamental de la dynamique que l'effort d'entraînement ou effort moteur sert à vaincre les efforts résistants précités et à accélérer le véhicule (ou à le décélérer) selon la valeur de la différence entre l'effort moteur et la somme des efforts résistants.

Lorsque le conducteur du véhicule enfonce la pédale d'accélérateur d'une certaine valeur, l'unité de commande électronique détermine, à partir de cette valeur d'enfoncement et de la vitesse de rotation du moteur (correspondant à $\omega\_mot$), une consigne de couple $C\_mot$ qui fournit la force d'entraînement $F\_mot$ et l'accélération $\gamma$, dont la valeur est déterminée d'après les équations précédentes (principe fondamental de la dynamique). Cette consigne de couple moteur dépend aussi du rapport de boîte de vitesse engagé.

En d'autres termes, par un enfoncement donné de la pédale d'accélérateur, le conducteur manifeste sa volonté d'obtenir une accélération donnée du véhicule.

Cette accélération est une valeur à laquelle il est habitué, de manière cognitive, par l'usage répété du véhicule. Il convient donc que l'accélération du véhicule ne s'écarte pas de cette valeur d'accélération attendue. Plus particulièrement, il ne faut pas que le véhicule présente un écart subit d'accélération (ou de décélération) intempestive par rapport à la valeur issue de la volonté du conducteur, qui risquerait de surprendre le conducteur et de provoquer un problème de sécurité, par exemple un écart supérieur à 1,5 m/s$^2$ pendant plus de deux secondes.

Il existe un besoin pour une méthode de commande d'un groupe motopropulseur permettant la détection et l'évitement des accélérations intempestives d'un véhicule hybride, c'est-à-dire comprenant au moins deux sources de production de couple, un moteur à combustion interne et au moins une machine électrique, pour l'entraînement du véhicule

Par accélération intempestive, on entend une accélération non souhaitée ou non attendue par le conducteur du véhicule.

De l'état de la technique antérieure, on connaît les documents suivants.

Le document DE102005062870 divulgue une méthode de vérification d'un couple de consigne d'un véhicule hybride.

Le document US2012310455 divulgue une méthode de contrôle du couple de sortie d'un groupe motopropulseur hybride.

Le document CN104176047 divulgue une méthode de surveillance du couple d'un véhicule hybride.

Le document US2013073130 divulgue une méthode de contrôle de sécurité pour un véhicule hybride.

Le document US2015166044 divulgue un système et une méthode de contrôle du couple d'un véhicule hybride.

Le document KR20110033723 divulgue un système de sécurité pour un véhicule hybride.

Le document CN102774375 et le document CN102774377 divulguent un système de surveillance du couple d'un véhicule hybride.

On connaît également des procédés qui permettent de compenser les variations d'accélération du véhicule liés à un écart de masse ou à un écart de pente, par rapport à une accélération attendue sur une route plate et avec une charge de référence.

Le document EP1045121A1 divulgue un tel procédé. Ce procédé permet de réduire la sensation d'amoindrissement des performances provenant d'un roulage en pente montante et/ou avec un chargement important, en évitant les écarts d'accélération constatés par rapport à une accélération attendue dans des conditions de référence (i.e. : pente nulle, charge standard).

Le document US20180126936A1 divulgue un procédé d'étalonnage d'un capteur inertiel monté sur un véhicule et apte à déterminer un signal tel que l'accélération du véhicule. Il est indiqué que le signal peut être utilisé pour déclencher notamment un dispositif de sécurité du véhicule tel qu'un airbag ou un dispositif de freinage tel qu'un système ESP.

Aucun de ces documents ne résout le problème technique.

### Exposé de l'invention

L'invention a pour objet un procédé de commande d'un groupe motopropulseur pour véhicule automobile comprenant au moins une roue motrice et deux sources de puissance motrice, comprenant les étapes suivantes :

- on détermine des tolérances maximale et minimale de couple à la roue par rapport à des règles prédéterminées,
- on détermine une consigne de couple à la roue en fonction d'une requête de couple du conducteur ou d'au moins un système d'aide à la conduite,
- on détermine une répartition de la consigne de couple à la roue entre les sources de puissance motrice,
- on vérifie que la somme des consignes de couple à la roue des sources de puissance motrice est comprise dans les tolérances précédemment déterminées par rapport à la requête de couple du conducteur,
- on vérifie, pour chaque source de puissance motrice, que le couple effectif ramené à la roue est compris dans les tolérances précédemment déterminées par rapport à la consigne de couple à la roue pour la source de puissance motrice,
- on vérifie que la somme des couples effectifs ramenés à la roue de chaque source de puissance motrice est également comprise dans les tolérances précédemment déterminées par rapport à la consigne de couple à la roue,
- si au moins une des vérifications n'est pas validée, on émet un signal de défaut.

Pour déterminer la consigne de couple à la roue, on peut réaliser les étapes suivantes :

- on détermine une première requête de couple à la roue du conducteur par l'intermédiaire d'un premier niveau de commande,

- on détermine une première consigne de couple à la roue en fonction de la première requête de couple à la roue du conducteur et des sources de puissance motrice du groupe motopropulseur par l'intermédiaire du premier niveau de commande,

- on détermine une deuxième requête de couple à la roue du conducteur par l'intermédiaire d'un deuxième niveau de commande,

- on détermine une deuxième consigne de couple à la roue en fonction de la deuxième requête de couple à la roue du conducteur et des sources de puissance motrice du groupe motopropulseur par l'intermédiaire du deuxième niveau de commande,

- on vérifie si la première consigne de couple à la roue et la deuxième consigne de couple à la roue sont égales, aux tolérances prédéterminées prés,

- si tel est le cas, on considère que la première consigne de couple à la roue est la consigne de couple à la roue.

On peut déterminer le couple effectif de chaque source de puissance motrice, et le couple effectif ramené à la roue de chaque source de puissance motrice, par l'intermédiaire du deuxième niveau de commande.

La répartition de la consigne de couple à la roue entre les sources de puissance motrice du groupe motopropulseur peut dépendre de contraintes d'optimisation énergétique, d'agrément, de dépollution, de fiabilité du véhicule.

La répartition de la consigne de couple à la roue peut être déterminée par le premier niveau de commande.

Les vérifications et les limitations des consignes de couple ou des couples effectifs de la au moins une source de puissance motrice peuvent être déterminées par le second niveau de commande.

Lorsqu'un signal de défaut est émis suite à une vérification non validée, on peut commander une réinitialisation du niveau de commande ou de la au moins une source de puissance motrice concernée, puis on peut réaliser de nouveau la vérification, si la vérification n'est toujours pas validée, on peut commander la limitation de la consigne de couple ou du couple effectif de la au moins une source de puissance motrice concernée.

Le groupe motopropulseur peut être un groupe motopropulseur hybride.

Le au moins un système d'aide à la conduite peut comprendre un régulateur de vitesse.

### Brève description des dessins

D'autres buts, caractéristiques et avantages de l'invention apparaîtront à la lecture de la description suivante, donnée uniquement à titre d'exemple non limitatif et faite en référence au dessin annexé sur lequel :

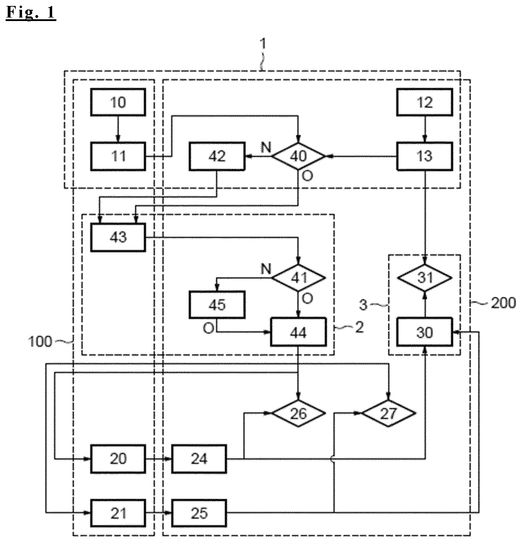

- la figure 1 illustre les principales étapes d'un procédé de commande selon l'invention

### Description détaillée

Le procédé de commande selon l'invention est appliqué à un véhicule automobile muni d'un groupe motopropulseur GMP hybride comprenant un moteur à combustion interne et au moins une machine électrique ou à un véhicule électrique comprenant au moins deux machines électriques.

Le procédé de commande permet de commander un groupe motopropulseur comprenant plusieurs sources motrices, produisant un couple (moteur à combustion interne, alterno-démarreur, machines électriques de traction, ...) tout en surveillant des risques d'accélération et de décélération intempestives.

Le procédé de commande comprend une première étape 1 (sous-étapes 10, 11, 12, 13, 40, 42), au cours de laquelle on construit une consigne de couple à la roue souhaitée par le conducteur de façon sécurisée par rapport au risque de mauvaise interprétation des demandes d'accélération ou de décélération du conducteur via la pédale d'accélérateur ou des systèmes d'aide à la conduite. Cette consigne est sécurisée par rapport à des tolérances respectivement maximale et minimale de couple à la roue qui sont acceptables sans provoquer d'accélération (couple moteur trop important par rapport à la demande conducteur) ou de décélération (couple résistif trop important par rapport à la demande conducteur) anormalement dangereuse.

Lors d'une deuxième étape 2 (sous-étapes 43, 41, 44, 45), après que le système de contrôle a calculé des consignes de couple pour chaque source motrice du groupe motopropulseur, on vérifie que la somme des contributions de chaque consigne à l'accélération ou la décélération du véhicule reste dans les tolérances précédemment déterminées par rapport à la demande de couple d'accélération ou décélération du conducteur.

Lors d'une troisième étape 3 (sous-étapes 30, 31), on vérifie que la somme des contributions effectives de chaque source motrice, c'est-à-dire la somme des couples effectifs ramenés à la roue des différentes sources motrices, reste également dans les tolérances précédemment déterminées par rapport à la demande de couple d'accélération ou décélération du conducteur.

On définit des termes suivants. Une accélération intempestive est définie comme une accélération produite par le groupe motopropulseur supérieure à la « volonté du conducteur » plus un écart. Par « volonté du conducteur », on entend l'accélération attendue par le conducteur compte tenu de l'enfoncement de la pédale d'accélération. De manière symétrique, on peut définir une décélération intempestive. Cette accélération sera traduite en couple excédentaire par rapport à la volonté du conducteur.

En outre, la sécurisation d'une source motrice peut être réalisée de plusieurs manières, par exemple en ajoutant des barrières mécaniques, des redondances (par exemple, deux calculateurs qui travailleraient en parallèle) ou comme ici en développant un procédé de commande redondé avec des propriétés particulières conformément au standard eGAS VDA 6.0.

Conformément au standard eGAS VDA 6.0, on définit un calculateur avec une structure à trois niveaux de commande :

Les deux premiers niveaux sont exécutés sur le même microcontrôleur, appelé microcontrôleur principal :

- Le premier niveau de commande correspond au procédé de contrôle du groupe motopropulseur embarquant l'ensemble des stratégies afin de produire le couple à la roue demandé par le conducteur à partir de la pédale d'accélérateur et en répondant aux différentes contraintes externes (agrément, dépollution, optimisation de la consommation) ...

- Le second niveau de commande correspond à un procédé de commande développé de manière indépendante vis-à-vis du premier niveau afin de garantir l'absence de panne systématique. Le second niveau de commande vérifie le bon fonctionnement du premier niveau de commande. Si une erreur est détectée, plusieurs réactions sont possibles (remise à zéro de l'unité de commande électronique ECU, limitation de performances ...). Il est à noter que ce procédé de commande est simplifié par rapport au logiciel du premier niveau car il ne surveille que les éventuelles défaillances du premier niveau pouvant mener à un événement potentiellement sécuritaire (i.e. accélération intempestive, décélération intempestive). Les autres défaillances ne sont pas surveillées.

- Le troisième niveau est exécuté sur un microcontrôleur indépendant et il correspond à la surveillance de la bonne exécution du deuxième niveau via un jeu de question réponses. En cas de détection d'erreur, différentes réactions sont possibles. En l'absence de deuxième microcontrôleur dans l'ECU, il serait également possible de réaliser le niveau 3 par un autre ECU qui diagnostiquerait l'intégrité de l'ECU principal.

Les étapes du procédé de commande vont maintenant être définies plus précisément.

Dans le cadre d'un niveau 1 (SW layer 1) noté 100 sur la figure [Fig 1], lors d'une première sous-étape 10, on réalise une acquisition de la position de la pédale d'accélérateur. Dans un mode de réalisation particulier, on réalise l'acquisition des données de vitesse requise par au moins un système d'aide à la conduite, notamment un régulateur de vitesse. La pédale d'accélérateur ou le système d'aide à la conduite sont les seules interfaces avec le conducteur permettant de connaître sa volonté d'accélérer ou de décélérer le véhicule.

On rappelle que dans un véhicule, l'enfoncement de la pédale d'accélérateur permet de construire une consigne d'accélération y du véhicule. La consigne d'accélération y peut alors être transformée en une consigne de couple à la roue C_roue ou encore en une consigne de puissance à fournir au véhicule. A ce stade, la répartition de la consigne entre les différentes sources d'énergie possibles n'est pas encore réalisée.

Toujours au cours de la sous-étape 10, on réalise au moins un diagnostic sur l'acquisition afin de s'assurer que le composant est fonctionnel. Un diagnostic est choisi parmi une détection de dérive, une détection de saturation, une détection de problème électrique, ..., en comparant une valeur déterminée qui est une fonction de l'acquisition, à une valeur de seuil. Si au moins un des diagnostics révèle une défaillance, on propose, dans le cadre du niveau 1 (SW layer 1), une reconfiguration dégradée du groupe motopropulseur permettant de fonctionner sans utiliser le composant en défaut.

Au cours d'une sous-étape étape 11, on détermine une consigne de couple à la roue en fonction de l'acquisition réalisée afin de pouvoir piloter le GMP pour répondre à la demande d'accélération ou de décélération du conducteur.

Dans le cadre d'un niveau 2 (SW layer 2) noté 200 sur la figure, au cours d'une sous-étape 12, on réalise l'acquisition de la position de la pédale d'accélérateur ou l'acquisition des données de vitesse requise par au moins un système d'aide à la conduite tel que décrit ci-dessus. On réalise ensuite au moins un diagnostic sur l'acquisition afin de s'assurer que le composant est fonctionnel. Un diagnostic est choisi parmi une détection de dérive, une détection de saturation, une détection de problème électrique, ..., en comparant une valeur déterminée, qui est une fonction de l'acquisition, à une valeur de seuil. Si au moins un des diagnostics révèle une défaillance, on propose, dans le cadre du niveau 2 (SW layer 2), une reconfiguration dégradée du groupe motopropulseur permettant de fonctionner sans utiliser le composant en défaut.

Au cours d'une sous-étape 13, on détermine ensuite une consigne de couple à la roue en fonction de l'acquisition afin de pouvoir piloter le GMP pour répondre à la demande d'accélération ou de décélération du conducteur.

Le niveau 2 (SW layer 2) permet d'avoir une redondance dans les calculs par rapport au niveau 1 (SW layer 1).

Toujours dans le cadre du niveau 2 (SW layer 2), on détermine une tolérance minimale et une tolérance maximale d'écart de couple à la roue, par rapport au risque d'accélération ou de décélération excessive. Dans un mode de réalisation particulier, ces tolérances dépendent de la vitesse actuelle du véhicule, et du fait que le conducteur est en train d'accélérer ou de freiner. Elles peuvent également dépendre d'autres paramètres tels que la température ou l'adhérence de la route.

Lors d'une sous-étape 40, on réalise ensuite une première vérification en déterminant si la consigne de couple à la roue calculée par le niveau 1 (SW layer 1) à la sous-étape 11 est comprise entre d'une part la consigne de couple à la roue calculée par le niveau 2 (SW layer 2) à la sous-étape 13 additionnée à la tolérance maximale, et d'autre part, la consigne de couple à la roue calculée par le niveau 2 (SW layer 2) à la sous-étape 13 à laquelle est soustraite la tolérance minimale.

Si tel est le cas, on considère que la consigne de couple du niveau 1 est sécurisée et le procédé se poursuit à la sous-étape 41

Si tel n'est pas le cas, le procédé se poursuit alors à la sous-étape 42 au cours de laquelle on détermine qu'il existe un problème. On limite alors la consigne de couple déterminée par le niveau 1 (SW layer 1) à la sous-étape 11 par la tolérance maximale calculée par le niveau 2 (SW layer 2) pour s'assurer qu'aucun événement sécuritaire ne peut apparaître. On réalise cette étape de limitation afin d'augmenter la disponibilité du GMP, afin de conserver un fonctionnement dégradé du GMP au lieu de couper immédiatement le couple GMP. On permet ainsi de disposer d'une bonne robustesse par rapport à des dérives légères ou des déphasages de calcul entre les deux niveaux 100,200, notamment dans les phases transitoires (décollage, accélération, freinage).

Si on détermine après une durée prédéterminée, que la consigne de couple à la roue calculée par le niveau 1 (SW layer 1) à la sous-étape 11 n'est toujours pas comprise entre la consigne de couple à la roue calculée par le niveau 2 (SW layer 2) à la sous-étape 13 additionnée à la tolérance maximale, et la consigne de couple à la roue calculée par le niveau 2 (SW layer 2) à la sous-étape 13 à laquelle est soustraite le la tolérance minimale, on commande la coupure du GMP car il y a une présence certaine d'une défaillance grave de l'ECU.

Au cours d'une la sous-étape 43, une répartition entre les sources motrices du groupe motopropulseur de la consigne de couple à la roue précédemment déterminée par le niveau 1 (SW layer 1) à la sous-étape 11 et le cas échéant limitée à la sous-étape 42, est effectuée par le niveau 1 (SW layer 1). Cette répartition tient compte de contraintes d'optimisation énergétique, d'agrément, de dépollution, de fiabilité.

En d'autres termes : le couple à la roue total C_roue est réparti entre une ou plusieurs contributions de couple à la roue à fournir par le ou les sources motrices, notamment le couple à la roue fourni par le moteur à combustion interne C_roue,mot et/ou le couple à la roue fournir par une machine électrique C_roue,machine.

La répartition dépend de différentes stratégies embarquées dans le véhicule. Par exemple, on peut envisager de faire fonctionner le moteur à combustion interne sur son point de meilleur rendement BSFC (acronyme anglophone pour « Brake Spécifie Fuel Comsumption », consommation spécifique effective en français) et de calculer le couple électrique comme le complément à fournir pour correspondre au couple requis par le conducteur. Par exemple, quand un dispositif de dépollution du moteur à combustion interne est froid, on peut choisir une consigne de couple à la roue à fournir par le moteur qui soit élevée, de manière à augmenter les pertes thermiques et à chauffer le dispositif plus rapidement.

Indépendamment de la répartition qui est choisie par des stratégies indépendantes de l'invention, il est essentiel pour obtenir l'accélération correspondant à la volonté du conducteur que la somme des couples à la roue de chaque source motrice soit bien égale (à la tolérance près) à la consigne de couple total, ou couple global.

Toujours au sein de la sous-étape 43, on détermine la contribution de couple à fournir par chaque source motrice en fonction de la contribution de couple à la roue à fournir par ladite source motrice. Ce calcul est réalisé en tenant compte du rapport de démultiplication entre cette source et les roues. En d'autres termes, on détermine une consigne de couple pour chaque source motrice.

Par rapport aux risques d'accélération ou décélération intempestive, il est donc nécessaire de vérifier la résultante des contributions de l'ensemble des consignes de couple. Il n'est donc pas judicieux de faire une redondance dans le niveau 2 (SW layer 2) 200 des calculs individuels de répartition de consigne réalisés dans le niveau 1 (SW layer 1) 100.

Au cours de la sous-étape 41, on détermine au sein du niveau 2 (SW layer 2) si la somme des consignes de couple à la roue calculées par le niveau 1 est incluse dans une plage comprise entre d'une part, la somme de la consigne de couple calculée par le niveau 2 à la sous-étape 13 (SW layer 2) et de la tolérance maximale, et d'autre part la différence entre cette même consigne du couple et la tolérance minimale.

Si tel est le cas, on considère que les consignes de couple à la roue et les consignes de couple de chaque source motrice sont sécurisées. Le procédé se poursuit par une la sous-étape 44 au cours de laquelle ces dernières consignes de couple sont envoyées aux systèmes de commande des différentes sources motrices.

Si tel n'est pas le cas, on considère que les consignes de couple de chaque source motrice ne sont pas sécurisées et une requête de remise à zéro de l'ECU est émise (sous-étape 45). Si après la remise à zéro de l'ECU, on détermine que la somme des consignes de couples à la roue calculées par le niveau 1 n'est toujours pas incluse dans une plage s'étendant entre respectivement la somme de la consigne de couple calculée par le niveau 2 (SW layer 2) et de la tolérance maximale, et, la différence entre la consigne de couple calculée par le niveau 2 (SW layer 2) et la tolérance minimale, on commande l'arrêt complet du groupe motopropulseur, en coupant les consignes aux sources motrices produisant un couple et aux sources d'énergie (sous-étape non représentée sur la figure 1). Dans le cas contraire, le procédé reprend à la sous-étape 44.

A partir des consignes de couple individuelles transmises à la sous-étape 44, on commande chaque source motrice pour produire les valeurs de couple effectif qui sont requises. Dans le cadre d'un groupe motopropulseur comprenant un moteur à combustion interne et une machine électrique, le procédé comprend une sous-étape 20 au cours de laquelle on commande les actionneurs du moteur à combustion interne et une sous-étape 21 au cours de laquelle on commande les actionneurs de la machine électrique.

Par exemple, pour le moteur à combustion interne, on ajuste au moins une quantité d'air et une quantité de carburant admis dans les cylindres. Pour une machine électrique, on ajuste les valeurs de tension et d'intensité d'alimentation de la machine.

Au cours d'une sous-étape 24, on estime le couple effectif fourni par le moteur à combustion interne. On en déduit aussi la valeur correspondante du couple effectif ramené à la roue qui est fourni par le moteur.

Au cours d'une sous-étape 25, on estime le couple effectif fourni par la machine électrique. On en déduit aussi la valeur correspondante du couple effectif ramené à la roue qui est fourni par la machine électrique.

Au cours d'une sous-étape 26, on détermine la défaillance du moteur à combustion interne, pouvant conduire à un dépassement des tolérances d'accélération ou de décélération intempestives en déterminant si le couple effectif ramené à la roue qui est fourni par le moteur n'est pas compris dans une gamme de valeurs s'étendant de la somme de la consigne de couple à la roue pour le moteur à combustion interne et de la tolérance maximale, à la différence entre la consigne de couple à la roue pour le moteur à combustion interne et de la tolérance minimale. Si tel est le cas, on commande la réinitialisation du moteur à combustion interne. Si après une durée prédéterminée, on détermine toujours la présence d'une défaillance, on commande la limitation du couple à une valeur prédéterminée. Si après une nouvelle durée prédéterminée, qui peut être différente de la première, on détermine toujours la présence d'une défaillance, on commande l'arrêt du moteur à combustion interne (sous-étapes non représentées sur la figure 1).

Au cours d'une la sous-étape 27, on détermine de manière similaire la défaillance de la machine électrique, pouvant conduire à un dépassement des tolérances d'accélération ou de décélération intempestives en déterminant si le couple effectif ramené à la roue qui est fourni par la machine électrique n'est pas compris dans une gamme de valeurs s'étendant de la somme de la consigne de couple à la roue pour la machine électrique, et de la tolérance maximale, à la différence entre la consigne de couple à la roue pour la machine électrique et de la tolérance minimale. Si tel est le cas, on commande la réinitialisation de la machine électrique. Si après une durée prédéterminée, on détermine toujours la présence d'une défaillance, on commande la limitation du couple à une valeur prédéterminée. Si après une nouvelle durée prédéterminée, on détermine toujours la présence d'une défaillance, on commande l'arrêt de la machine électrique (sous-étapes non représentées sur la figure 1).

La puissance et le couple fournis respectivement par le moteur et par la machine électrique, c'est-à-dire leurs couples effectifs, peuvent être déterminés par différentes méthodes, selon la technologie des sources : Calcul de la puissance par mesure du courant dans une machine électrique, ramenée au couple par la mesure de vitesse angulaire.

Calcul du couple de combustion par la mesure des variations instantanées de la vitesse de rotation du vilebrequin dans un moteur à combustion interne, tel que décrit par exemple dans la publication FR2681425.

Calcul du couple du moteur à combustion interne par un modèle de combustion basé sur l'énergie introduite dans le cylindre et son rendement (quantité de carburant injectée, phasage de la combustion, richesse du mélange).

Par la suite, les valeurs correspondantes des couples effectifs ramenés à la roue sont déduites desdites valeurs de couple effectif en tenant compte des rapports de démultiplication entre chaque source considérée et les roues motrices du véhicule.

Enfin, même si chaque couple effectif ramené à la roue reste individuellement dans les tolérances, il n'est pas exclu de rencontrer un dépassement global qui soit hors tolérance au niveau du groupe motopropulseur, car la tolérance appliquée individuellement à chaque couple effectif ramené à la roue est la même que la tolérance appliquée au couple total d'entraînement du véhicule. Il est alors nécessaire de surveiller le couple à la roue global, c'est-à-dire total, produit par le groupe motopropulseur en fonction de la consigne de couple total requis. Pour réaliser cela, le procédé se poursuit par une sous-étape 30, au cours de laquelle on estime le couple total produit à la roue dans le niveau 2 (SW layer 2) en sommant les valeurs des couples effectifs ramenés à la roue qui sont fournis par chaque source motrice, déterminées aux sous-étapes 26,27 à partir des valeurs des couples effectifs.

Au cours d'une sous-étape 31, on détermine si le couple total estimé à la sous-étape 30 est compris dans une gamme de valeurs s'étendant de la somme de la consigne de couple à la roue déterminée à la sous-étape 13 par le niveau 2 (SW layer 2) et de la tolérance maximale, à la différence entre la requête de couple à la roue déterminée à la sous-étape 13 par le niveau 2 (SW layer 2) et la tolérance minimale.

Si tel n'est pas le cas, on commande la réinitialisation du groupe motopropulseur. Si au bout d'une durée prédéterminée, le couple total estimé n'est toujours pas compris dans la gamme de valeurs, on commande l'arrêt du groupe motopropulseur (sous-étapes non représentées sur la figure 1).

## Revendications

1. Procédé de commande d'un groupe motopropulseur pour véhicule automobile comprenant au moins une roue motrice et deux sources de puissance motrice, comprenant les étapes suivantes :

   - on détermine des tolérances maximale et minimale de couple à la roue par rapport à des règles prédéterminées,
   - on détermine une consigne de couple à la roue (11,13) en fonction d'une requête de couple du conducteur ou d'au moins un système d'aide à la conduite (10,13),

- on détermine une répartition de la consigne de couple à la roue entre les sources de puissance motrice (43),
- on vérifie que la somme des consignes de couple à la roue des sources de puissance motrice est comprise dans les tolérances précédemment déterminées par rapport à la requête de couple du conducteur (41),

ledit procédé étant **caractérisé en ce qu'**il comprend les étapes supplémentaires suivantes:

- on vérifie, pour chaque source de puissance motrice, que le couple effectif ramené à la roue est compris dans les tolérances précédemment déterminées par rapport à la consigne de couple à la roue pour la source de puissance motrice (26,27),
- on vérifie que la somme des couples effectifs ramenés à la roue de chaque source de puissance motrice est également comprise dans les tolérances précédemment déterminées par rapport à la consigne de couple à la roue (31),
- si au moins une des vérifications n'est pas validée, on émet un signal de défaut.

2. Procédé de commande selon la revendication 1, dans lequel pour déterminer la consigne de couple à la roue, on réalise les étapes suivantes :

- on détermine une première requête de couple à la roue du conducteur (10) par l'intermédiaire d'un premier niveau de commande (100),
- on détermine une première consigne de couple à la roue (11) en fonction de la première requête de couple à la roue du conducteur (10) et des sources de puissance motrice du groupe motopropulseur par l'intermédiaire du premier niveau de commande (100),
- on détermine une deuxième requête de couple à la roue du conducteur (12) par l'intermédiaire d'un deuxième niveau de commande (200),
- on détermine une deuxième consigne de couple à la roue (13) en fonction de la deuxième requête de couple à la roue du conducteur (12) et des sources de puissance motrice du groupe motopropulseur par l'intermédiaire du deuxième niveau de commande (200),
- on vérifie si la première consigne de couple à la roue et la deuxième consigne de couple à la roue sont égales, aux tolérances prédéterminées prés (40),
- si tel est le cas, on considère que la première consigne de couple à la roue est la consigne de couple à la roue.

3. Procédé de commande selon la revendication 2, dans lequel on détermine le couple effectif de chaque source de puissance motrice, et le couple effectif ramené à la roue de chaque source de puissance motrice (24,25), par l'intermédiaire du deuxième niveau de commande (200).

4. Procédé de commande selon la revendication 3, dans lequel la répartition de la consigne de couple à la roue entre les sources de puissance motrice du groupe motopropulseur dépend de contraintes d'optimisation énergétique, d'agrément, de dépollution, de fiabilité du véhicule.

5. Procédé de commande selon l'une quelconque des revendications 2 à 4, dans lequel la répartition de la consigne de couple à la roue est déterminée (43) par le premier niveau de commande (100).

6. Procédé de commande selon l'une quelconque des revendications 2 à 5, dans lequel les vérifications et les limitations des consignes de couple ou des couples effectifs de la au moins une source de puissance motrice sont déterminées par le second niveau de commande (200).

7. Procédé de commande selon l'une quelconque des revendications 2 à 6, dans lequel lorsqu'un signal de défaut est émis suite à une vérification non validée, on commande une réinitialisation du niveau de commande ou de la au moins une source de puissance motrice concernée, puis on réalise de nouveau la vérification, si la vérification n'est toujours pas validée, on commande la limitation de la consigne de couple ou du couple effectif de la au moins une source de puissance motrice concernée.

8. Procédé de commande selon l'une quelconque des revendications précédentes, dans lequel le groupe motopropulseur est un groupe motopropulseur hybride.

9. Procédé de commande selon l'une quelconque des revendications précédentes, dans lequel le au moins un système d'aide à la conduite comprend un régulateur de vitesse.

**Patentansprüche**

1. Verfahren zur Steuerung einer Antriebseinheit für ein Kraftfahrzeug, das mindestens ein Antriebsrad und zwei Antriebsleistungsquellen umfasst, umfassend die folgenden Schritte:

- Bestimmen der maximalen und minimalen Raddrehmomenttoleranzen in Bezug auf vorherbestimmte Regeln,
- Bestimmen eines Raddrehmomentsollwerts (11,13) in Abhängigkeit von einer Drehmomentanforderung des Fahrers oder mindestens eines Fahrassistenzsystems (10,13),

- Bestimmen einer Verteilung des Raddrehmomentsollwerts zwischen den Antriebsleistungsquellen (43),

- Überprüfen, dass die Summe der Raddrehmomentsollwerte der Antriebsleistungsquellen innerhalb der Toleranzen liegt, die zuvor in Bezug auf die Drehmomentanforderung des Fahrers bestimmt wurden (41), wobei das Verfahren **dadurch gekennzeichnet ist, dass** es die folgenden zusätzlichen Schritte umfasst:

- Überprüfen, für jede Antriebsleistungsquelle, dass das auf das Rad bezogene tatsächliche Drehmoment innerhalb der Toleranzen liegt, die zuvor in Bezug auf den Raddrehmomentsollwert für die Antriebsleistungsquelle (26,27) bestimmt wurden,

- Überprüfen, dass die Summe der auf das Rad bezogenen tatsächlichen Drehmomente jeder Antriebsleistungsquelle ebenfalls innerhalb der Toleranzen liegt, die zuvor in Bezug auf den Raddrehmomentsollwert bestimmt wurden (31),

- wenn mindestens eine der Überprüfungen ungültig ist, Ausgeben eines Fehlersignals.

2. Verfahren zur Steuerung nach Anspruch 1, bei dem zum Bestimmen des Raddrehmomentsollwerts die folgenden Schritte ausgeführt werden:

   - Bestimmen einer ersten Raddrehmomentanforderung des Fahrers (10) über eine erste Steuerebene (100),
   - Bestimmen eines ersten Raddrehmomentsollwerts (11) in Abhängigkeit von der ersten Raddrehmomentanforderung des Fahrers (10) und von den Antriebsleistungsquellen der Antriebseinheit über die erste Steuerebene (100),
   - Bestimmen einer zweiten Raddrehmomentanforderung des Fahrers (12) über eine zweite Steuerebene (200),
   - Bestimmen eines zweiten Raddrehmomentsollwerts (13) in Abhängigkeit von der zweiten Raddrehmomentanforderung des Fahrers (12) und von den Antriebsleistungsquellen der Antriebseinheit über die zweite Steuerebene (200),
   - Überprüfen, ob der erste Raddrehmomentsollwert und der zweite Raddrehmomentsollwert bis auf die vorherbestimmten Toleranzen gleich sind (40),
   - wenn dies der Fall ist, wird davon ausgegangen, dass der erste Raddrehmomentsollwert der Raddrehmomentsollwert ist.

3. Verfahren zur Steuerung nach Anspruch 2, bei dem das tatsächliche Drehmoment jeder Antriebsleistungsquelle und das auf das Rad bezogene tatsächliche Drehmoment jeder Antriebsleistungsquelle (24,25) über die zweite Steuerebene (200) überprüft werden.

4. Verfahren zur Steuerung nach Anspruch 3, bei dem die Verteilung des Raddrehmomentsollwerts zwischen den Antriebsleistungsquellen der Antriebseinheit von Energieoptimierungs-, Komfort-, Reinigungs-, Zuverlässigkeitsvorgaben des Fahrzeugs abhängt.

5. Verfahren zur Steuerung nach einem der Ansprüche 2 bis 4, bei dem die Verteilung des Raddrehmomentsollwerts durch die erste Steuerebene (100) bestimmt wird (43).

6. Verfahren zur Steuerung nach einem der Ansprüche 2 bis 5, bei dem die Überprüfungen und die Beschränkungen der Drehmomentsollwerte oder der tatsächlichen Drehmomente der mindestens einen Antriebsleistungsquelle durch die zweite Steuerebene (200) bestimmt werden.

7. Verfahren zur Steuerung nach einem der Ansprüche 2 bis 6, bei dem, wenn nach einer ungültigen Überprüfung ein Fehlersignal ausgegeben wird, eine Reinitialisierung der Steuerebene oder der betreffenden mindestens einen Antriebsleistungsquelle gesteuert wird, dann die Überprüfung erneut ausgeführt wird, wenn die Überprüfung noch immer nicht gültig ist, die Beschränkung des Drehmomentsollwerts oder des tatsächlichen Drehmoments der betreffenden mindestens einen Antriebsleistungsquelle gesteuert wird.

8. Verfahren zur Steuerung nach einem der vorhergehenden Ansprüche, bei dem die Antriebseinheit eine Hybrid-Antriebseinheit ist.

9. Verfahren zur Steuerung nach einem der vorhergehenden Ansprüche, bei dem das mindestens eine Fahrassistenzsystem einen Geschwindigkeitsregler umfasst.

## Claims

1. Method for controlling a motor vehicle powertrain comprising at least one drive wheel and two driving power sources, comprising the following steps:

   - determining maximum and minimum wheel torque tolerances in relation to predetermined rules,
   - determining a wheel torque setpoint (11, 13) as a function of a torque request from the driver or from at least one driving assistance system (10, 13),
   - determining a distribution of the wheel torque setpoint between the driving power sources (43),
- checking that the sum of the wheel torque setpoints of the driving power sources is within the previously determined tolerances in relation to the torque request from the driver (41), said method being **characterized in that** it comprises the following additional steps:
- checking, for each driving power source, that the torque actually delivered to the wheel is within the previously determined tolerances in relation to the wheel torque setpoint for the driving power source (26, 27),
- checking that the sum of the torques actually delivered to the wheel from each driving power source is also within the previously determined tolerances in relation to the wheel torque setpoint (31),
- if at least one of the checks is not validated, issuing a fault signal.

2. Control method according to Claim 1, in which the following steps are carried out in order to determine the wheel torque setpoint:

   - determining a first wheel torque request from the driver (10) using a first control level (100),
   - determining a first wheel torque setpoint (11) as a function of the first wheel torque request from the driver (10) and of the driving power sources of the powertrain using the first control level (100),
   - determining a second wheel torque request from the driver (12) using a second control level (200),
   - determining a second wheel torque setpoint (13) as a function of the second wheel torque request from the driver (12) and of the driving power sources of the powertrain using the second control level (200),
   - checking whether the first wheel torque setpoint and the second wheel torque setpoint are equal, to within the predetermined tolerances (40),
   - if so, considering that the first wheel torque setpoint is the wheel torque setpoint.

3. Control method according to Claim 2, in which the actual torque from each driving power source, and the torque actually delivered to the wheel from each driving power source (24, 25), are determined using the second control level (200).

4. Control method according to Claim 3, in which the distribution of the wheel torque setpoint between the driving power sources of the powertrain depends on requirements relating to energy optimization, driving pleasure, pollution reduction and vehicle reliability.

5. Control method according to any one of Claims 2 to 4, in which the distribution of the wheel torque setpoint is determined (43) by the first control level (100).

6. Control method according to any one of Claims 2 to 5, in which the checks and limitations of the torque setpoints or the actual torques from the at least one driving power source are determined by the second control level (200).

7. Control method according to any one of Claims 2 to 6, in which, when a fault signal is issued following an unvalidated check, a command is given to reset the control level or the at least one driving power source in question, and the check is then performed again; if the check is still not validated, a command is given to limit the torque setpoint or the actual torque from the at least one driving power source in question.

8. Control method according to any one of the preceding claims, in which the powertrain is a hybrid powertrain.

9. Control method according to any one of the preceding claims, in which the at least one driving assistance system comprises a speed controller.

**Fig. 1**

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102005062870
- US 2012310455 A
- CN 104176047
- US 2013073130 A
- US 2015166044 A
- KR 20110033723
- CN 102774375
- CN 102774377
- EP 1045121 A1
- US 20180126936 A1
- FR 2681425